# EUROPEAN PATENT APPLICATION

(11) **EP 4 095 105 A1**
(43) Date of publication of application: **30.11.2022**
(21) Application number: 22174087.1
(22) Date of filing: 18.05.2022
(51) Int. Cl.: C02F 9/00, C02F 103/00, C02F 1/32, C02F 1/36, C02F 1/78, C02F 1/38, C02F 1/24, C02F 1/463, C02F 1/467, C02F 3/12, C02F 3/20, C02F 1/465

(54) **MULTISTAGE GREYWATER TREATMENT SYSTEM**

(30) Priority: 24.05.2021 US 202163192425 P; 13.05.2022 US 202217743808
(71) Applicant: Kohler Co., Kohler, WI 53044 (US)
(72) Inventor: KWACZ, Jason, Kohler, 53044 (US)
(74) Representative: Barker Brettell LLP

(57) **Abstract**

A multistage greywater treatment system including at least one separation stage, at least one solid removal stage, and at least one disinfection stage. The at least one separation stage is configured to separate water from one or more water draining device into at least three outputs including a first intermediate greywater. The at least one solid removal stage is configured to receive the first intermediate greywater and dissolve solids from the first intermediate greywater to output a second intermediate greywater. The at least one disinfection stage is configured to receive the second intermediate greywater. The resultant greywater may be provided to at least one recycled water consuming device after passing through the at least one separation stage, at least one solid removal stage, and the at least one disinfection stage.

## Description

### CROSS-REFERENCE TO RELATED APPLICATIONS

This application claims priority benefit of US Provisional Patent Application No. 63/192,425 (Docket No. 010222-21020A-US) filed on May 24, 2021, and US Patent Application No. 17/743,808 filed on May 13, 2022, which are hereby incorporated by reference in their entirety.

### FIELD

The present application relates generally to water conservation and recycling in indoor environments.

### BACKGROUND

Water consumption is a growing problem. According to recent reports, in approximately 25 years, fresh water may become very scarce. Some predictions state that the entire world's population may suffer a water shortage or otherwise be adversely affected by 2040. Within an ever growing population is the ongoing demand for commercial goods in which requires water for manufacturing. This industrial practice, particularly in time of drought and with the ongoing global pollution of lakes, rivers and oceans, only continues to aggravate the potentials for looming shortages.

According to the Environmental Protection Agency (EPA), the average American family uses approximately 870 liters of water per day. Efforts to reduce consumption to a fraction of this level may require drastic changes in lifestyle unless significant changes are made to the everyday practices of bathing, laundry, and cleaning. Therefore, being presented is a method and apparatus capable of implementation into any structure to perform water conservation through recycling.

### BRIEF DESCRIPTION OF THE DRAWINGS

Exemplary embodiments are described herein with reference to the following drawings, according to an exemplary embodiment.
FIG. 1 illustrates an example multistage greywater treatment system.
FIG. 2 illustrates an example hydrodynamic centrifugal separation device.
FIG. 3 illustrates an example foam fractionation device.
FIG. 4 illustrates an example membrane bio reactor device.
FIG. 5 illustrates an example ultrasonic cavitation device.
FIG. 6 illustrates another example ultrasonic cavitation device.
FIG. 7 illustrates an example shock electrodialysis device.
FIG. 8 illustrates an example aquaporin filter.
FIG. 9 illustrates an example carbon nanotube filter.
FIG. 10 illustrates another example multistage greywater treatment system.
FIG. 11 illustrates examples of additional or alternative stages for the multistage greywater treatment system.
FIG. 12 illustrates another example multistage greywater treatment system including one or more bypasses.
FIG. 13 illustrates another example multistage greywater treatment system including one or more intermediate and/or preliminary devices.
FIG. 14 illustrates an example controller for the multistage greywater treatment system.
FIG. 15 illustrates a flow chart for the controller of the multistage greywater treatment system.

### DETAILED DESCRIPTION

Water entry and exit is dependent upon a series of pipes commonly referred to as plumbing and where upon installation, is regulated under specific aspects of building codes. Building codes are referred to by building inspectors to insure a quality of construction. Plumbing codes refer to three different types of water associated with construction: potable water, greywater (grey water) and black water (blackwater). During construction, potable water rates the highest in priority in regard to safe delivery and whereas household waste water commonly referred to as greywater, may be generated by households while doing chores such as, washing dishes, clothes, brushing teeth, taking baths, showers, or any water utilized in which is not directly related to toilets or urinals. The following embodiments introduce multistage greywater treatment systems including one or more of hydrodynamic centrifugal separation, foam fractionation, membrane bio reactor, or ultrasonic cavitation, as well as other devices or processes described herein.

After exiting the greywater treatment system, the water is returned to one or more appliances such as a toilet or an irrigation system for reuse. It is possible for all or substantially all of the water consumed by one or more toilets, and/or by the irrigation system, to be fully supplied by the greywater system.

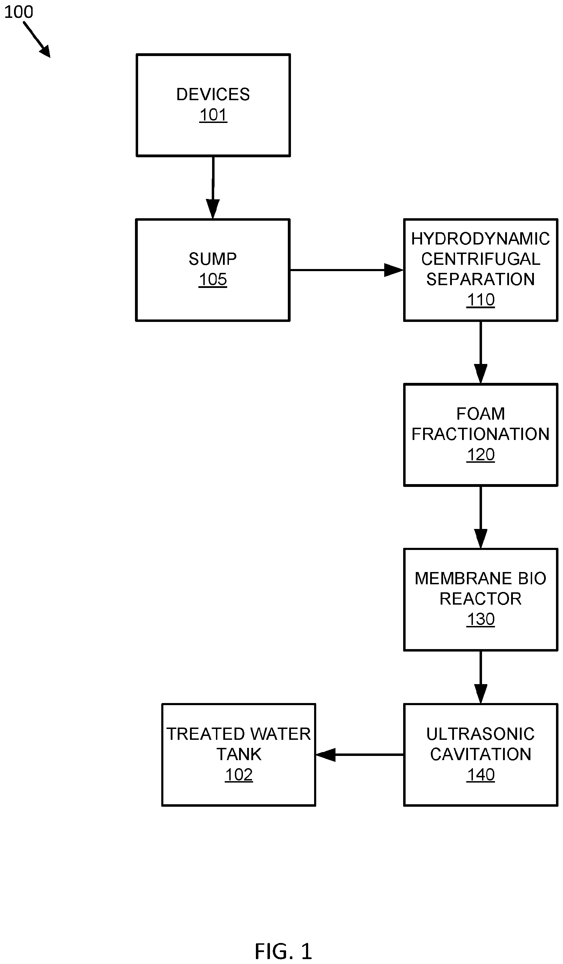

FIG. 1 illustrates an example multistage greywater treatment system. The system may include a hydrodynamic centrifugal separation device 110, a foam fractionation device 120, a membrane bio reactor 130, and ultrasonic cavitation device 140. Additional, different or fewer components may be included.

The greywater system may be installed in a variety of locations in a home or building. A modular flexible frame may be used to install the system in a wall or floor. The greywater system may be installed in a standalone frame (e.g., in a basement or utility room). The greywater system may include additional components such as tubes, pipes, adapters, tees, elbow and water separation device and joints. The plumbing may include parallel supply and drain lines for freshwater and greywater. Any of the greywater systems described herein may include plumbing components upstream of the treatment devices including a dirt filter, a counter, a rinse filter, a pressure transducer, a main filter and/or water softener.

The greywater treatment system may include one or more tanks. For example, a sump 105 may be connected to one or more devices 101 for collecting untreated greywater from water consuming devices (water draining devices). In addition, or alternatively, a treated water tank 102 may collect the treated water from the greywater system. Both or either of the sump 105 and the treated water tank 102 may be integral within a housing of the greywater system or be external to the greywater system.

One or more devices 101, which may be greywater producing devices, have drains or other plumbing connected to the sump 105. The devices 101 may include different tiers of greywater producing devices. As described herein, different tiers of greywater devices may be associated with different stages or subsets of stages of the greywater treatment system. A first tier of devices may include showers, sinks, or other devices that produce water but may not include significant solids or oils. A second tier of devices may include dishwashers, washing machines, or other devices likely to have significant particulates. Example particulates may include food, soap, and other chemicals. Other devices, for example blackwater devices (e.g., toilets, garbage disposals), may not be included in devices 101. Alternatively, a third tier of devices (e.g., toilets, garbage disposals) may be defined.

The greywater treatment system may output treated water to the treated water tank 102. The treated water tank 102 may be included in the greywater treatment system. The treated water tank 102 may be a standalone tank. The treated water tank 102 may be included in a device that uses the treated water. For example, one or more of the devices 101 may be connected to the treated water tank 102. In some examples, one tier of devices is connected to the sump 105 and another tier of devices is connected to the treated water tank 102. For example, a shower may be connected to the sump 105 for collected the greywater and a toilet may be connected to treated water tank 102 for consuming the treated greywater. In some examples, the treated water tank 102 is omitted and the treated water is applied directly to the device using the treated water.

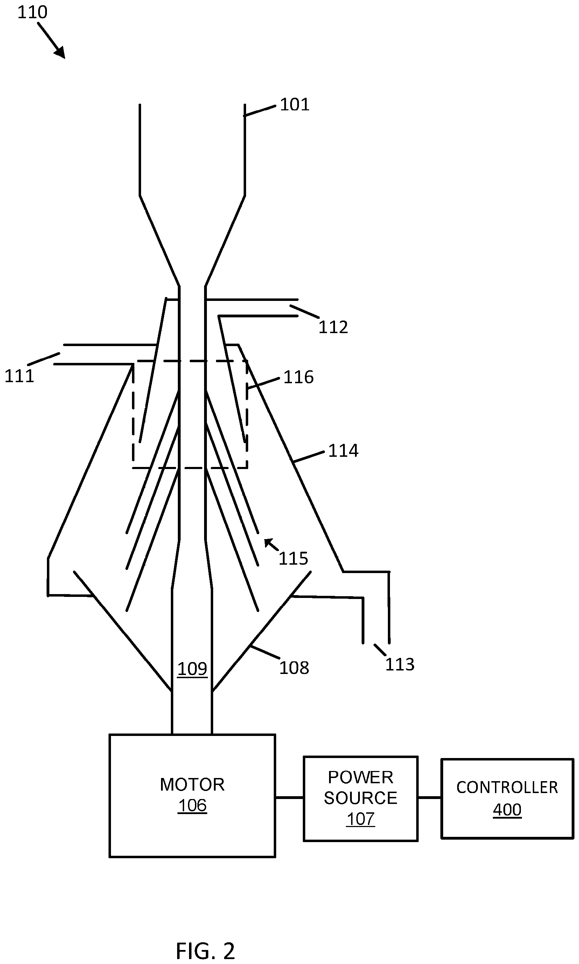

FIG. 2 illustrates an example hydrodynamic centrifugal separation device 110. The hydrodynamic centrifugal separation device 110 may include one or more water inlets 111 and at one or more outlets. A bowl 108 and a bowl hood 114 combine to form one or more chambers including at least a distributor 116 and a disk stack 115 for separating one or more solids and/or one or more liquids from the greywater that is inputted to the hydrodynamic centrifugal separation device 110 through the water inlet 111. Additional, different or fewer components may be included.

The disk stack 115 and the distributor 116 separates components of the greywater based on density. As shown, the hydrodynamic centrifugal separation device 110 includes three outlets, including a heavy outlet 111, a light outlet 112, suspended solid output 113. The heavy outlet 111 may correspond to the treated water, which may be the component of the greywater having a first (medium) density range (e.g., 950-1100 kg/m³). The light outlet 112 may correspond to oil, which may be the component of the greywater having a second (low) density range (e.g., 750-950 kg/m³). The suspended soil output may correspond to particulates (e.g., food or other materials) in the water, which may be the component of the greywater having a third (high) density range (e.g., 1200 or greater kg/m³). However, the solids may be separated from the greywater based on drag (e.g., a drag coefficient) rather than the density of the solid. Thus, the greywater may be separated into three components based on a first principle (density) to separate oils from the water and a second principle (drag) to separate solids from the water. Both principles may operate at the same time.

The distributor 116 may include one or more pumps driven by the motor 106. The disk stack 115 may form multiple angled bowls that when spun, separate materials of different densities at different diameters. The hydrodynamic centrifugal separation device 110 includes a shaft 109 coupled to motor 106 and configured to rotate the disk stack 115 and/or at least a portion of the distributor 116. The motor 106 is electrically connected to a power source 107 and may be operated by a controller as described herein. Any number of chambers may be used and implemented by a corresponding number of disks in the disk stack 115.

The hydrodynamic centrifugal separation device 110 may include one or more chambers for collecting the solids. The chamber may be removed to remove the solids from the hydrodynamic centrifugal separation device 110. A user may be alerted to remove and empty the chamber. The chamber may include a sensor to detect the amount of solids in the chamber. The sensor may measure a weight of the chamber or a fill level in the chamber. The sensor may generate data sent to the controller or an indicator associated with the hydrodynamic centrifugal separation device 110. In addition or in the alternative, the solids may be sent to a drain to be emptied from the hydrodynamic centrifugal separation device 110. The solids may be chemically altered or mechanically altered (e.g., pulverized by a blade) to facilitate draining.

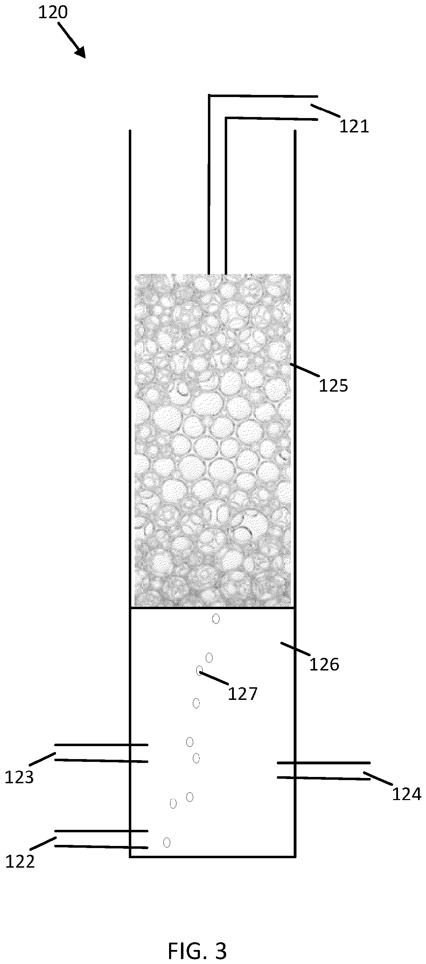

FIG. 3 illustrates an example foam fractionation device 120. The foam fractionation device 120 may include a liquid pool chamber 126 and a foam chamber 125. The foam fractionation device 120 may include at least one inlet and at least one outlet. For example, a greywater inlet 123 may receive greywater from the sump 105 or another stage of the greywater system, such as the hydrodynamic centrifugal separation device 110, as illustrated. In addition, an air inlet 122 may provide gas (e.g., air) to the liquid pool chamber 126. A foam outlet 121 removes the foam from the foam chamber 125. Additional, different or fewer components may be included.

The foam fractionation device 120 is configured to foam off suspended or dissolved materials from the greywater using adsorption on surfaces of one or more bubbles 127. Adsorption is the process in which molecules of solids are adhered to the surface of the bubble 127. The process may create a film on the surface of the adsorbent. The bubbles 127 float and travel through the liquid pool chamber 126 to float on the water, forming the foam. The foam outlet 121 may include a skimmer to remove the foam. The foam outlet 121 may include suction (e.g., vacuum pressure) to remove the foam. The suction may be provided by a pump. The suction may be provided by another stage of the greywater system or shared with another stage of the greywater system. In one example, the pump of the hydrodynamic centrifugal separation device 110 provides the vacuum pressure for the foam outlet 121.

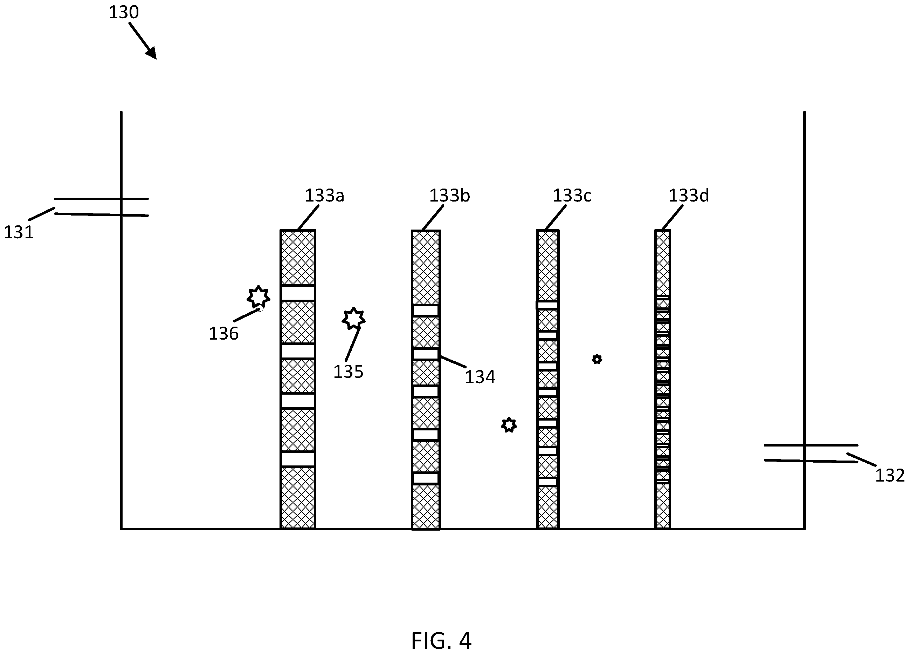

FIG. 4 illustrates an example membrane bio reactor device 130. The membrane bio reactor device 130 may include at least one inlet and at least one outlet. For example, a greywater inlet 131 may receive greywater from the sump 105 or another stage of the greywater system, such as the foam fractionation device 120 as illustrated. The membrane bio reactor device 130 includes one or more membranes 133. The example in FIG. 4 illustrates multiple membranes, e.g., first membrane 133a, second membrane 133b, third membrane 133c, and/or fourth membrane 133d. Adjacent to each membrane or between membranes, compartments are formed. Additional, different or fewer components may be included.

The membrane bio reactor device 130 may include one or more living organisms. For example, bacteria may be added to the membrane bio reactor device 130. The bacteria may be capable of consuming one or more components of the greywater. The bacteria may attach to the components of the graywater. The bacteria may target other living organisms, such as viruses. The bacteria may be configured to destroy or kill viruses.

In the example of one membrane 133, the membrane 133 may include pores having a predetermined size. The pore size may be small enough that certain bacteria cannot pass through. When the bacteria is attached or adhered to components of the greywater, those components are also prevented from traveling through the membrane 133.

In the example of multiple membranes 133, the membranes 133 form multiple pools or compartments. Each of the membranes 133 includes pores 134 having different sizes. In addition or in the alternative, each of the membranes may have a different thickness. The pore size and/or the membrane thickness may control the size of particles that can travel through the membranes. The compartments may include different sizes of bacteria.

In some examples, the bacteria is selected to target certain components of the greywater. The membrane pore size may be selected to keep the bacteria in their respective pools. For example, bacteria 136 may be too large to fit through the pores of membrane 133a, while bacteria 135 is small enough to fit through the pores of membrane 133a but not through the pores of membrane 133b.

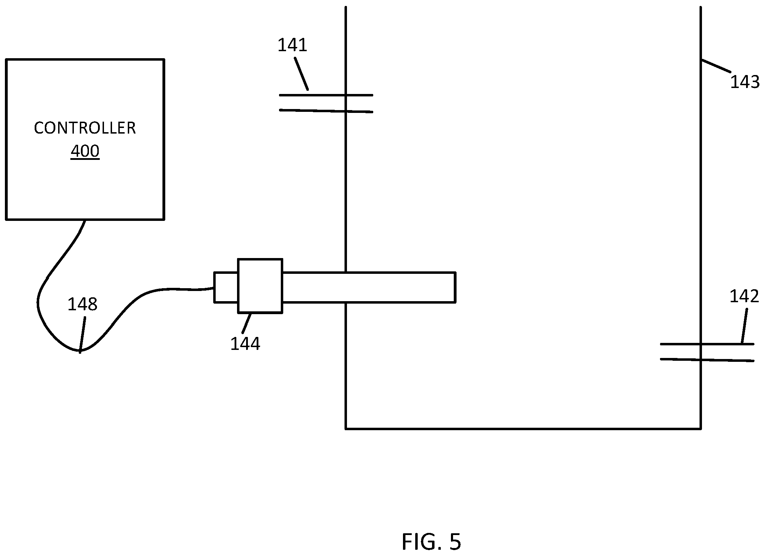

FIG. 5 illustrates an example ultrasonic cavitation device 140. The ultrasonic cavitation device 140 may include a tank 143 having at least a greywater inlet 141 and a treated water outlet 142. For example, a greywater inlet 141 may receive greywater from the sump 105 or another stage of the greywater system, such as the membrane bio reactor device 130 as illustrated. One or more transducers 144 may be mounted on the tank 143. Additional, different or fewer components may be included.

The transducers 144 may be ultrasonic transducers that generate high energy waves into the water of the tank 143. The waves may be at a predetermined frequency range that is greater than the range of human hearing. Example frequencies include a range of 20-60 kHz. Specific frequencies or other frequency ranges may be selected for specific implementations (e.g., the frequency range may depend on the other stages of the greywater system, the frequency range may depend on the type of greywater, or the frequency range may depend on the components of the greywater.)

The high energy waves cause compression and expansion on a molecular level and cause the generation of bubbles. As more energy is applied to the bubbles, the ultrasonic cavitation device 140 may cause the bubbles to implode and release energy. The energy may be applied to any components of the greywater that are nearby, such as bacteria. The energy may cause the bacteria to be broken down into inert particles and/or further into extracellular polymers. The energy may cause local temperature spikes in the greywater.

The number of transducers 144 coupled to the container 143 may vary. The transducers 144 may be arranged around the tank at a particular height. A round tank may have a set number of transducers 144 around a radius. A square, rectangular, or other polygonal shaped tank may include a transducer 144 on each face. Transducers may be provided at different heights.

The controller 400 may provide electrical power to the transducer 144 through a cable 148. The controller 400 may configured to turn and off the transducer 144 according to a set pattern. The controller 400 may be able to select the frequency for the transducer 144. The controller 400 may receive a user selection for the duty cycle or frequency for the transducer 144. Example duty cycles sufficient to convert high bacteria greywater to usable for non-potable purposes may be 30-60 minutes.

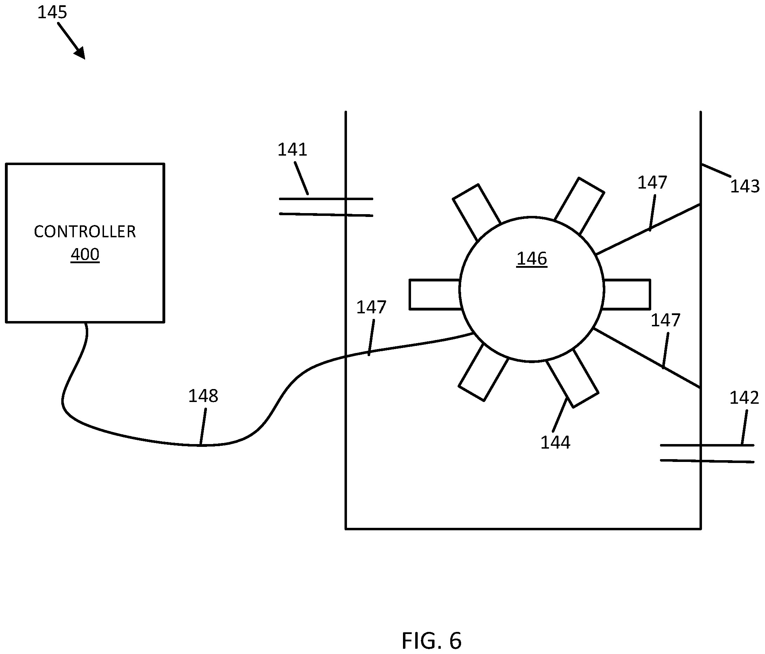

FIG. 6 illustrates another example ultrasonic cavitation device 145. The ultrasonic cavitation device 145 may include substantially the same components as described with respect to FIG. 5. The ultrasonic cavitation device 145 may include a transducer assembly 146 suspended in the middle or substantially the middle of the tank 143. The transducer assembly 146 may be attached to one or more tethers 147. The tethers 147 may include a cable, cord, or other extension member coupled to the wall of the tank by an adhesive or fastener. At least one of the tethers 147 may include the cable 148 for supply power and/or control signals to the transducer assembly 146. The transducer assembly 146 may include any number of transducers 144 pointed toward different portions of the tank 143. Additional, different or fewer components may be included.

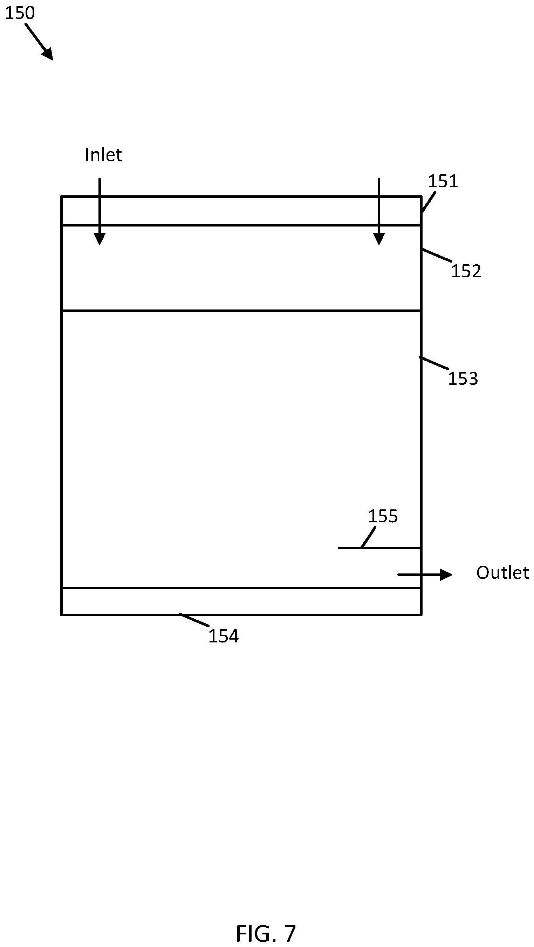

FIG. 7 illustrates an example shock electrodialysis device 150. The shock electrodialysis device 150 may include an anode 151, a reservoir 152, a porous chamber 153, and a cathode 154. The anode 151, the cathode 154, or both may be connected to a power supply such that a current flows through the anode 152 through the shock electrodialysis device 150 and then departs at the cathode 154. The shock electrodialysis device 150 may be referred to as a shock ED cell. The shock electrodialysis device 150 may be cylindrical or disc shaped. Additional, different, or fewer components may be included.

The shock electrodialysis device 150 uses an electric field to perform filtration, disinfection and/or desalination. The electric field is generated between the anode 151 and the cathode 154 pass through the porous chamber 152. Water (e.g., contaminated water) flows through the inlets through the reservoir 152 and the porous chamber 153 and eventually to the outlet. There may be a leaky membrane between the porous chamber 153 and the reservoir 152. The leaky membrane may be a double membrane. The porous chamber 153 may be formed of small glass particles, which may be referred to as a glass frit.

As current is passed through an ion depleted zone is formed. The ozone depleted zone may be near the cathode 154 in the porous chamber 152. As the voltage is increased, and the magnitude of the electric field increases, the concentration near the cathode 154 approaches zero. The metal ions are depleted and separate the feed stream into a brine portion and a fresh water portion. The two portions may be streams that are separated in the porous chamber 152. For example, the brine stream may be at the top of the porous chamber 152 and the fresh water stream may flow to the bottom of the porous chamber 152, allowing easy dispensing from the outlet.

The electric field may produce a shockwave inside the porous chamber 153 Including water. As the voltage increases and the electric field strengths there may be a specific voltage or electric that causes the shockwave. The shockwave may sharply divide the brine stream and the fresh water stream in such a way that a simple barrier can divide the flow and separate the fresh water.

A controller as described herein may be configured to control the shock electrodialysis device 150. The controller may switch on the power supply for the anode 151 and the cathode 154. The controller may set a voltage difference or an electric field gradient for the shock electrodialysis device 150. The controller may receive an input (e.g., sensor data) and select the voltage difference from the input. For example, the sensor data may indicate different levels of contamination, or a particular source of the grey water such as specific appliance. The sensor data may indicate a flow rate or cumulative flow of the grew water. The controller may then select the voltage difference for the shock electrodialysis device 150 based on water source and/or flow amount.

The controller may also control a valve or mechanical divider 155 for the outlet for the shock electrodialysis device 150. The valve or mechanical divider 155 may be actuated (e.g., by a motor, solenoid, or other actuator) to allow the fresh water to be dispensed through the outlet. The divider 155 may extend into the porous chamber 152 to divide the brine stream from the fresh water stream. The valve may open and close the outlet so that the fresh water can be dispensed.

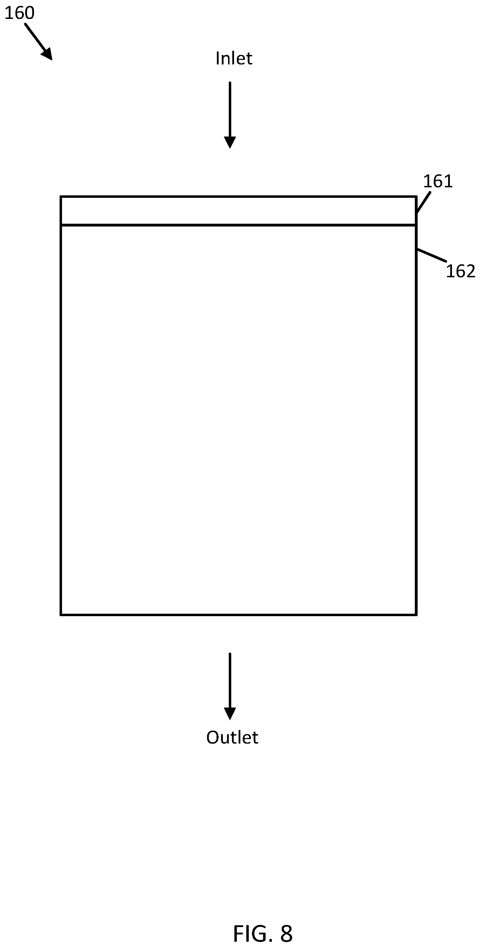

FIG. 8 illustrates an example aquaporin filter 160, which may be referred to as a water channel. The aquaporin filter 160 may include a membrane 161 and a support substrate 162. Additional, different, or fewer components may be included.

The membrane 161 may be reconstituted from living material. The membrane 161 may include one or more aquaporin proteins configured to filter water. Specifically, the aquaporin protein may facilitate the flow of water across the membrane 161. The membrane 161 may mimic the outside of a living cell to efficiently facilitate the transport of water across cell boundaries while blocking other substances.

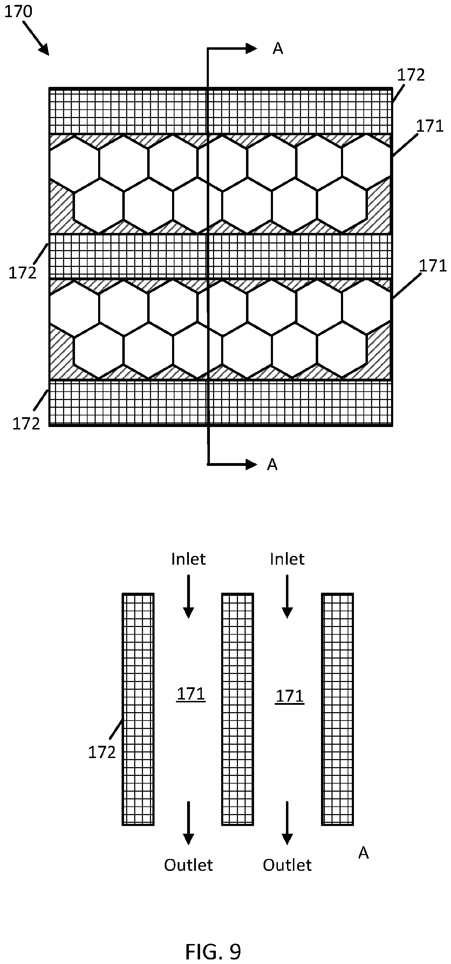

FIG. 9 illustrates an example carbon nanotube filter 170. The view of filter 170 is taken from a top down perspective (e.g., in the direction of the water flow). The cross section view A-A illustrates the direction of the water flow. The carbon nanotube filter 170 may include filter layers 171 and barrier layers 172. The barrier layers 172 may include other filters. The carbon nanotubes may be fabricated in a way to simulate or emulate the operation of aquaporin proteins. Additional, different, or fewer components may be included.

The filter layers 171 may include an arrangement of carbon nanotubes in a predetermined pattern. The filter layers 171 may be arranged in a flow of water along with the barrier layers 172 to force portions of the flow of water through the filter layers 171.

The filter layers 171 may be 0.3 to 0.8 nanometers wide and configured to filter out all ions, allowing only water molecules to pass. The filter layers 171 may be configured in various sizes and patterns in order to perform oil and water separation, suspended solids removal, or dissolved solids removal. The filter layers 171 may also perform disinfecting.

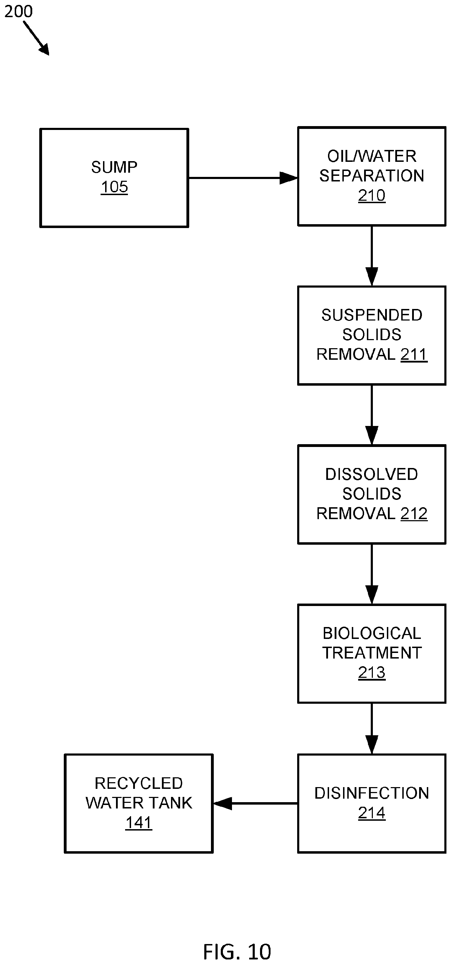

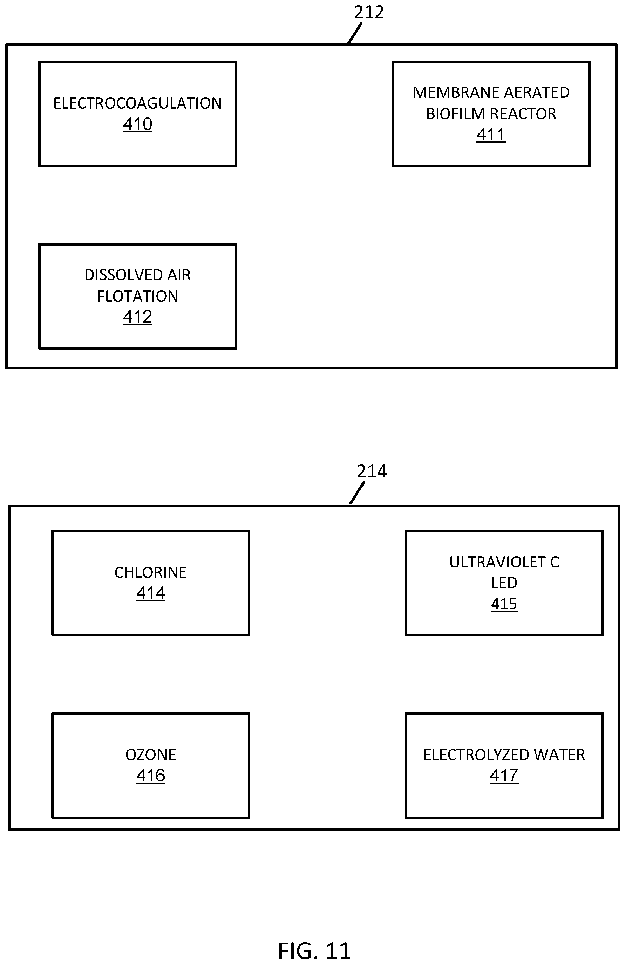

FIG. 10 illustrates another example multistage greywater treatment system 200. FIG. 11 illustrates examples of additional or alternative stages for the multistage greywater treatment system. That is, the stages in FIG. 11 may be interchanged with respective stages in FIG. 10, as described below. The multistage greywater treatment system 200 may include the number of stages/devices shown or any number of stages/device in any order. The multistage greywater treatment system 200 may include an oil and water separation device 210, a suspended solids removal device 211, a dissolved solids removal device 212, a biological treatment device 213, and a disinfection device 214.

Either or both of the water separation device 210 and the suspended solids removal device 211 may be implemented as at least one separation stage configured to separate water from one or more water draining device into at least three outputs including a first intermediate greywater. The suspended solids removal device 211 is at least one solid removal stage configured to receive the first intermediate greywater and dissolve solids from the first intermediate greywater to output a second intermediate greywater.

Examples for the separation stage include a hydrodynamic centrifugal separation device 110, an electrocoagulation device 410, a dissolved air flotation device 412, or other examples.

The electrocoagulation device 410 may be configured to apply an electrical charge to the greywater. The electrical charge causes particles in the water to become charged. The charged particles form an agglomeration, which effectively removes suspended solids and/or breaks emulsions such as oil and oxidizes certain metals or other particles without filtering. The electrocoagulation device 410 may perform electroflotation.

The dissolved air flotation device 412 is configured to separate particulate matter from the greywater by inserting gas bubbles as the transport surface. The bubbles may move in a particular direction toward a water transport surface, which may be opposite or substantially opposite of the direction of gravity.

Another example separation device may include forward osmosis that using a semipermeable membrane to separate solutes from the greywater. An osmotic pressure across the membrane may be caused by a high concentration solution on one side of the membrane to a low concentration solution on the other side of the membrane.

The dissolved solids removal device 212 may include the foam fractionation device 120 device, the electrocoagulation device 410, the dissolved air flotation device 412 described herein or other devices.

The biological treatment device 213 is at least one biological treatment stage configured to receive the second intermediate greywater including a biological reaction. Examples for the biological treatment stage may include the membrane bio reactor 130, a membrane aerated biofilm reactor 411, or other examples.

The membrane aerated biofilm reactor 411 may include a gas permeable membrane. Gas may be provided through the membrane to a biofilm. The biofilm is capable of oxidizing particles in the greywater.

At least one disinfection stage including the disinfection device 214 is configured to receive third intermediate greywater and disinfect the third intermediate greywater. The disinfection device 214 may be configured to apply a substance such as a chemical or gas to the greywater to eliminate bacteria or other living organisms from the greywater. The disinfection device 214 may be configured to apply energy such as light or another signal to the greywater to eliminate bacteria or other living organisms from the greywater. The disinfection device 214 may include the ultrasonic cavitation device 140, a chlorine device 414, an ultraviolet C light emitting diode (LED) device 415, an ozone generator 416, an electrolyzed water generator (which may also be known as an electro chlorination device) 417, or other examples. The ultrasonic cavitation device 140 may also perform disinfection.

The chlorine device 414 may disinfect the greywater by releasing a predetermined amount of chlorine or other chemical into the greywater. The ultraviolet C LED device 415 generates an ultraviolet light that may deactivate one or more organisms in the greywater. The ozone generator 416 is configured to generate O³ or ozone gas into the greywater. The ozone gas may react with or oxidize bacteria, organic material or other pollutants in the greywater.

The electrolyzed water generator 417 may include one or more water chambers including a salt solution having a predetermined concentration. The salt solution is passed through an electrolyze that forms ions and segregates the ions into solutions with opposite polarities or charges. The charged water is a disinfectant.

Other devices may include one or more of the following: density separation, non-powered hydrodynamic centrifugal separation, coarse filtration/carbon filter/membrane/microfiltration/nanofiltration, clarification/flocculation, sequential batch reactor, septic treatment, moving bed bio reactor, aeration, hydrogen peroxide, and/or advanced oxidation process.

After treatment by the greywater system 200, the resultant greywater is provided to at least one recycled water consuming device after passing through the at least one separation stage, at least one solid removal stage, the at least one biological treatment stage, and the at least one disinfection stage. Other orders or combinations may be used.

For example, Table 1 lists (on the horizontal top row) each of the water treatment devices described herein. A list of embodiments (Emb.) is provided in the subsequent rows, labeled 1-146. The "X" in the rows indicates the stages or devices included in each embodiment. The stages may be placed in the order from left to right for the sequence of the flow of water in the greywater system. Any order may be used. Additional, different or fewer components may be included.

**Table 1**

| Emb. | Centrifugal Separation | Electro coagulation | Dissolved Air Flotation | Foam Fraction -ation | Bio Reactor | Membrane Aerated Biofilm Reactor | Chlorine | UV-C LED | O³ | Electrolyzed Water | Ultrasonic Cavitation |
|---|---|---|---|---|---|---|---|---|---|---|---|
| 1 | x | | | | x | | x | | | | |
| 2 | x | | | | x | | | x | | | |
| 3 | x | | | | x | | | | x | | |
| 4 | x | | | | x | | | x | x | | |
| 5 | x | | | | x | | | | | x | |
| 6 | x | | | | x | | | | | | x |
| 7 | x | | | | | x | x | | | | |
| 8 | x | | | | | x | | x | | | |
| 9 | x | | | | | x | | | x | | |
| 10 | x | | | | | x | | x | x | | |
| 11 | x | | | | | x | | | | x | |
| 12 | x | | | | | x | | | | | x |
| 13 | x | | | | | | X | | | | |
| 14 | X | | | | | | | x | | | |
| 15 | X | | | | | | | | X | | |
| 16 | X | | | | | | | X | X | | |
| 17 | X | | | | | | | | | X | |
| 18 | X | | | | | | | | | | X |
| 19 | X | X | | | X | | X | | | | |
| 20 | X | X | | | X | | | X | | | |
| 21 | X | X | | | X | | | | X | | |
| 22 | X | X | | | X | | | X | X | | |
| 23 | X | X | | | X | | | | | X | |
| 24 | X | X | | | X | | | | | | X |
| 25 | X | X | | | | X | X | | | | |
| 26 | X | X | | | | X | | X | | | |
| 27 | X | X | | | | X | | | X | | |
| 28 | X | X | | | | X | | X | X | | |
| 29 | X | X | | | | X | | | | X | |
| 30 | X | X | | | | X | | | | | X |
| 31 | X | | X | | X | | X | | | | |
| 32 | X | | X | | X | | | X | | | |
| 33 | X | | X | | X | | | | X | | |
| 34 | X | | X | | X | | | X | X | | |
| 35 | X | | X | | X | | | | | X | |
| 36 | X | | X | | X | | | | | | X |
| 37 | X | | X | | | X | X | | | | |
| 38 | X | | X | | | X | | X | | | |
| 39 | X | | X | | | X | | | X | | |
| 40 | X | | X | | | X | | X | X | | |
| 41 | X | | X | | | X | | | | X | |
| 42 | X | | X | | | X | | | | | X |
| 43 | X | | | X | | | X | | | | |
| 44 | X | | | X | | | | X | | | |
| 45 | X | | | X | | | | | X | | |
| 46 | X | | | X | | | | X | X | | |
| 47 | X | | | X | | | | | | X | |
| 48 | X | | | X | | | | | | | X |
| 49 | X | | | X | X | | X | | | | |
| 50 | X | | | X | X | | | X | | | |
| 51 | X | | | X | X | | | | X | | |
| 52 | X | | | X | X | | | X | X | | |
| 53 | X | | | X | X | | | | | X | |
| 54 | X | | | X | X | | | | | | X |
| 55 | X | | | X | | X | X | | | | |
| 56 | X | | | X | | X | | X | | | |
| 57 | X | | | X | | X | | | X | | |
| 58 | X | | | X | | X | | X | X | | |
| 59 | X | | | X | | X | | | | X | |
| 60 | X | | | X | | X | | | | | X |
| 61 | | X | | | X | | X | | | | |
| 62 | | X | | | X | | | X | | | |
| 63 | | X | | | X | | | | X | | |
| 64 | | X | | | X | | | X | X | | |
| 65 | | X | | | X | | | | | X | |
| 66 | | X | | | X | | | | | | X |
| 67 | | X | | | | X | X | | | | |
| 68 | | X | | | | X | | X | | | |
| 69 | | X | | | | X | | | X | | |
| 70 | | X | | | | X | | X | X | | |
| 71 | | X | | | | X | | | | X | |
| 72 | | X | | | | X | | | | | X |
| 73 | | X | | | | | X | | | | |
| 74 | | X | | | | | | X | | | |
| 75 | | X | | | | | | | X | | |
| 76 | | X | | | | | | X | X | | |
| 77 | | X | | | | | | | | X | |
| 78 | | X | | | | | | | | | X |
| 79 | | X | | X | X | | X | | | | |
| 80 | | X | | X | X | | | X | | | |
| 81 | | X | | X | X | | | | X | | |
| 82 | | X | | X | X | | | X | X | | |
| 83 | | X | | X | X | | | | | X | |
| 84 | | X | | X | X | | | | | | X |
| 85 | | X | | X | | X | X | | | | |
| 86 | | X | | X | | X | | X | | | |
| 87 | | X | | X | | X | | | X | | |
| 88 | | X | | X | | X | | X | X | | |
| 89 | | X | | X | | X | | | | X | |
| 90 | | X | | X | | X | | | | | X |
| 91 | | X | | X | | | X | | | | |
| 92 | | X | | X | | | | X | | | |
| 93 | | X | | X | | | | | X | | |
| 94 | | X | | X | | | | X | X | | |
| 95 | | X | | X | | | | | | X | |
| 96 | | X | | X | | | | | | | X |
| 97 | | | X | | X | | X | | | | |
| 98 | | | X | | X | | | X | | | |
| 99 | | | X | | X | | | | X | | |
| 100 | | | X | | X | | | X | X | | |
| 101 | | | X | | X | | | | | X | |
| 102 | | | X | | X | | | | | | X |
| 103 | | | X | | | X | X | | | | |
| 104 | | | X | | | X | | X | | | |
| 105 | | | X | | | X | | | X | | |
| 106 | | | X | | | X | | X | X | | |
| 107 | | | X | | | X | | | | X | |
| 108 | | | X | | | X | | | | | X |
| 109 | | | X | | | | X | | | | |
| 110 | | | X | | | | | X | | | |
| 111 | | | X | | | | | | X | | |
| 112 | | | X | | | | | X | X | | |
| 113 | | | X | | | | | | | X | |
| 114 | | | X | | | | | | | | X |
| 115 | | | X | X | X | | X | | | | |
| 116 | | | X | X | X | | | X | | | |
| 117 | | | X | X | X | | | | X | | |
| 118 | | | X | X | X | | | X | X | | |
| 119 | | | X | X | X | | | | | X | |
| 120 | | | X | X | X | | | | | | X |
| 121 | | | X | X | | X | X | | | | |
| 122 | | | X | X | | X | | X | | | |
| 123 | | | X | X | | X | | | X | | |
| 124 | | | X | X | | X | | X | X | | |
| 125 | | | X | X | | X | | | | X | |
| 126 | | | X | X | | X | | | | | X |
| 127 | | | X | X | | | X | | | | |
| 128 | | | X | X | | | | X | | | |
| 129 | | | X | X | | | | | X | | |
| 130 | | | X | X | | | | X | X | | |
| 131 | | | X | X | | | | | | X | |
| 132 | | | X | X | | | | | | | X |
| 133 | | | | X | X | | X | | | | |
| 134 | | | | X | X | | | X | | | |
| 135 | | | | X | X | | | | X | | |
| 136 | | | | X | X | | | | | X | |
| 137 | | | | X | X | | | | | | X |
| 138 | | | | X | | X | X | | | | |
| 139 | | | | X | | X | | X | | | |
| 140 | | | | X | | X | | | X | | |
| 141 | | | | X | | X | | | | X | |
| 142 | | | | X | | X | | | | | X |
| 143 | | | | X | X | | | X | | | X |
| 144 | | | | X | | X | | X | | | X |
| 145 | | | | X | X | | X | | | | X |
| 146 | | | | X | | X | X | | | | X |

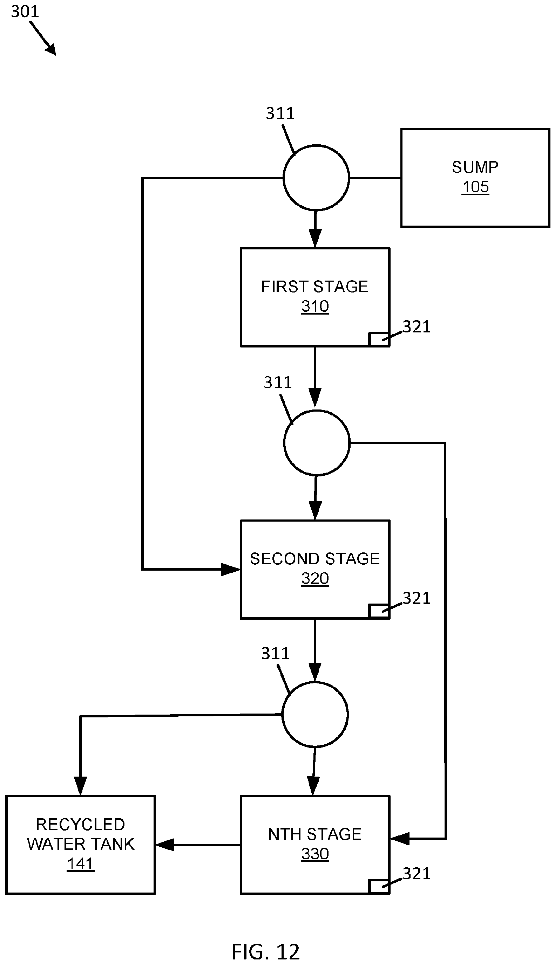

Table 1 may be implemented as illustrated in FIG. 12 as another example multistage greywater treatment system 301 including multiple stages, a first stage 310, a second stage 320, and any number of additional stages, represented by stage N 330. Before, after, or in between stages are one or more bypasses devices 311. A bypass device 311 may include a valve, diverter, or another mechanism for selectively controlling the flow of water between stages. One or more stages may include a sensor 321. Additional, different or fewer components may be included.

The controller 400 is configured to receive user selections or sensor data and determine one or more bypass commands in response. The sensors 321 may be the same or different types of sensors. One or more of the sensors 321 may be a level sensor. The controller 400 may analyze sensor data from one or more sensor 321 to determine whether there is a malfunction in an associated device. The controller 400 may analyze sensor data from one or more sensor 321 to determine whether there is a tank with a water level above a predetermined level (e.g., full tank condition) in an associated device. In response to one or more of these conditions, the controller 400 may generate a command to actuate a bypass 311 in order to circumvent the stage/device associated with the full tank condition or the malfunction.

The sensor 321 may be a pressure sensor that detects a water level in a tank of the device. The sensor 321 may be a temperature sensor. In one example, the temperature of a bio reactor is monitored to make sure that the bacteria have appropriate living conditions. In one example, the temperature of the foam in the foam fractionation device is monitored to keep the temperature in a predetermined range. The controller 400 may provide commands to turn a heater on and off to adjust the temperature. The sensor 312 may include a floating level slidably mounted on a shaft. The position of the level may be detected by motion sensor, image sensor, or distance sensor. In addition or in the alternative, when the water level in the tank is below a predetermined water level, a valve may be opened to allow freshwater to be added to the greywater tank so that there is enough water for the process associated with the device.

The sensor 321 may be configured to detect a property of the treated greywater from the treatment system. The property may be any combination of the transparency of the water, the turbidity of the water, the pH of the water, the biological oxygen demand, biochemical oxygen demand (BOD), total suspended solids (TSS), fecal coliform content, E. Coli content, or residual chlorine.

A control circuit or controller 400 may compare the property of the treated greywater to a threshold. A feedback system including feedback path is configured to return threated greywater to the treatment device or to another treatment device in response to the property of the treated greywater. That is, if one or more standards for the property of the greywater are not met, the treated water is feedback to the treatment system for additional treatment.

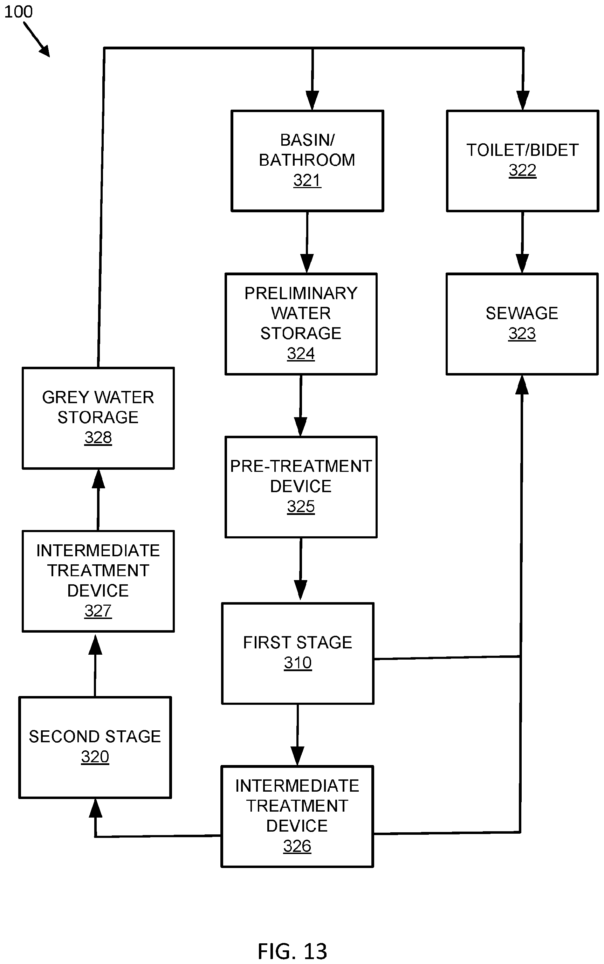

Table 1 may be implemented as illustrated in FIG. 13 as another example multistage greywater treatment system 100 having two stages. One or more preliminary or intermediate stages may also be included.

A grey water system may include a flow loop or loop of interconnected devices provided from the basin/bathroom devices 221 through a preliminary water storage 324, a pre-treatment device 325, a first stage of treatment 310, an intermediate treatment device 326, a second stage of treatment 320, and another intermediate treatment device 327 before reaching a grey water storage 328. The grey water storage 328 may provide water to the basin/bathroom devices 221 and the toilet/bidet 322 as demanded. Water deemed as black water travels to the sewage 323 either directly from the toilet/bidet 322 or from one or more stages that expel waste (e.g., as shown in FIG. 13 this includes the first stage 310 and the intermediate treatment device 326).

The preliminary water storage 324 may include a tank of water collected from the basin/bathroom devices 321. The preliminary water storage 324 may include a pump to force the water to subsequent stages. The preliminary water storage 324 may utilize gravity to force the water to subsequent stages.

The pre-treatment device 325 may include sieving, filtering, or other processes to prepare the water for the first stage of treatment 310. The pre-treatment device 325 may include devices for removing large coarse objects from the water. The large coarse object may include hair, lint, sand, metal and/or plastic. The pre-treatment device 325 may include a mesh, a screen, or another type of filter.

The first stage of treatment 310 may include a separation stage. The waste (e.g., removed solids) from the separation stage may be provided to the sewage 323. The first stage of treatment 310 may include the hydrodynamic centrifugal separation device 110, the foam fractionation device 120, the membrane bio reactor device 130, the ultrasonic cavitation device 140, the hydrodynamic centrifugal separation device 110, the electrocoagulation device 410, the dissolved air flotation device 412, the ultrasonic cavitation device 145, or the aquaporin filter 160. The first stage of treatment 310 may include a centrifugal pump.

The intermediate treatment device 326 may include additional filters for the output of the first stage of treatment. The intermediate treatment device 326 may include sieving, filtering, or other processes to prepare the water for the second stage of treatment 320. The pre-treatment device 325 may include devices for removing very fine object or other contaminants they may have passed through the first stage of treatment 310.

The second stage of treatment 320 may include ozone, shock electrodialysis 150, UV disinfection, electrolyzed water, the ultrasonic cavitation device 145, or another device, as described herein.

The intermediate treatment device 327 may include an additional filtering or centrifugal device that separates solids or other containments to the water output from the first stage 310. These materials may be pushed through one or more plumbing fixtures to the sewage 323.

The grey water storage 328 may include the recycled water processed by the first stage of treatment 310 and the second stage of treatment 320. The grey water storage 328 may include a pump or other pressurizing mechanism to provide the recycled water from the grey water storage 328 to the basin/bathroom 321 or the toilet/bidet 322.

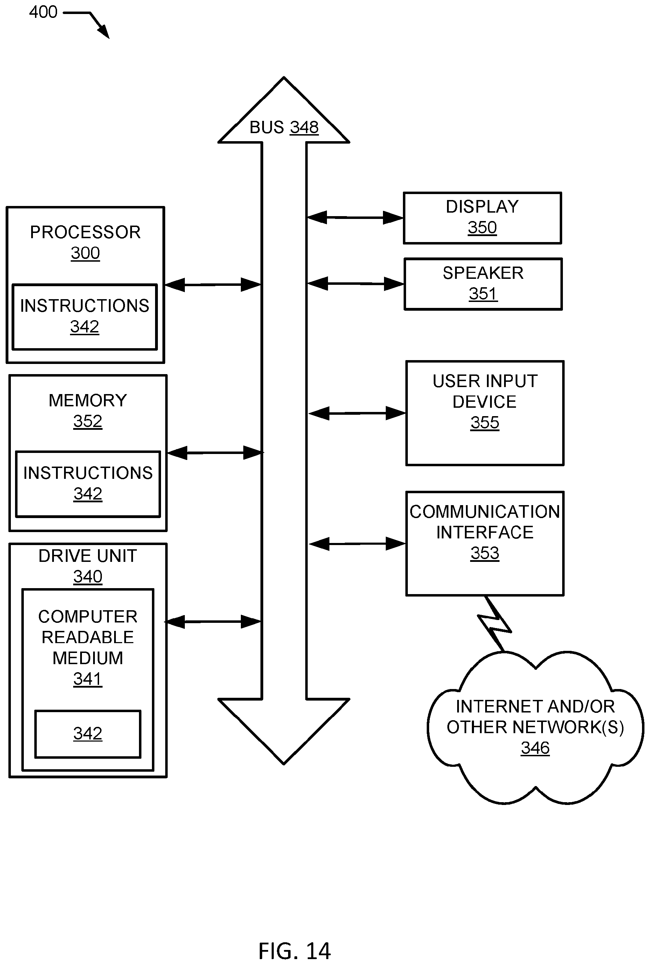

FIG. 14 illustrates an example controller for the multistage greywater treatment system. The controller 400 may include a processor 300, a memory 352, and a communication interface 353 for interfacing with devices or to the internet and/or other networks 346. In addition to the communication interface 353, a sensor interface may be configured to receive data from the sensors described herein or data from any source for analyzing water properties or the operation of the appliances described herein. The components of the control system 400 may communicate using bus 348. The control system 400 may be connected to a workstation or another external device (e.g., control panel) and/or a database for receiving user inputs, system characteristics, and any of the values described herein.

Optionally, the control system 400 may include an input device 355 and/or a sensing circuit in communication with any of the sensors. The sensing circuit receives sensor measurements from as described above. The input device 355 may include the switch 150, a touchscreen, a keyboard, a microphone for voice inputs, a camera for gesture inputs, and/or another mechanism.

Optionally, the control system 400 may include a drive unit 340 for receiving and reading non-transitory computer media 341 having instructions 342. Additional, different, or fewer components may be included. The processor 300 is configured to perform instructions 342 stored in memory 352 for executing the algorithms described herein. The display 350 may be combined with the user input device 355.

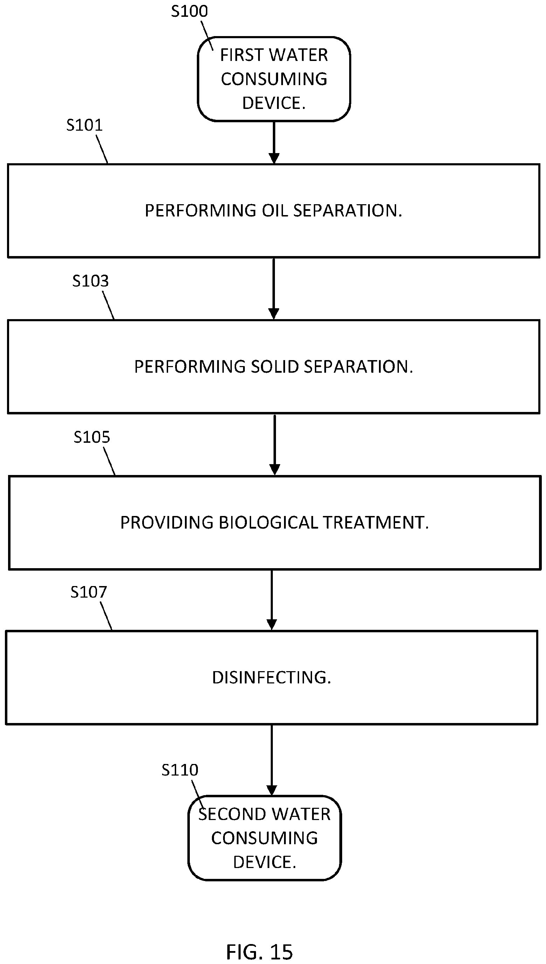

FIG. 15 illustrates a flow chart for the controller of the multistage greywater treatment system. The acts of the flow chart may be performed by any combination of the control system 400, the network device or the server. Portions of one or more acts may be performed by the appliance. Additional, different of fewer acts may be included.

At act S100, water is received from a first water consuming device. One or more valves, pumps, or plumbing fixtures may route the water from the first water consuming device to the subsequent stages of the graywater system. The water consuming appliances may include at least one appliance that expels oils and solids, such as a garbage disposal, a washing machine, or a dishwasher.

At act S101, a first stage, for example, oil separation is performed on the water. The oil separation may be performed by the hydrodynamic centrifugal separation device 110, foam fractionation device 120, the ultrasonic cavitation device 140, shock electrodialysis device 150, or another device. At act S103, a second stage, for example, solid separation, is performed on the water. The solid separation may be performed by the same device as the oil separation.

At act S105, a third stage, for example, biological treatment is performed on the water on the water. Examples for the biological treatment stage may include the membrane bio reactor 130, a membrane aerated biofilm reactor 411, or other examples. The biological treatment may be omitted in some embodiments.

At act S107, a fourth stage, for example, disinfection is performed on the water. Examples for the disinfection stage include ozone, ultraviolet light, and carbon nanotube disinfecting.

At act S110, through any combination of acts S101, S103, S105, and S107, the treated water is provided to a second water consuming device.

The controller 400 (e.g., through processor 300) receives sensor data for a property of a greywater device. The greywater device may be a tank and the sensor data may describe the level of the water in the tank. The greywater source may be a tank and the sensor data may describe the quality of the water in the tank. Example quality measures may include the level of biological material, the level of contaminants, the turbidity or any of the examples described herein. The greywater source may be a tube or pipe from a greywater treatment system and the sensor data may describe the quality of the greywater flowing through the tube or pipe. The greywater source may be a water consuming appliance tank and the sensor data may describe the quantity or quality of the output of water from the water consuming appliance. The sensor data, or a statistical parameter of the sensor data, may be displayed at display 350 or sent to the user or a central location through the communication interface 353.

The controller 400 (e.g., through processor 300) may compare the property of the greywater source to a threshold value. The threshold may be a predetermined value stored in memory 352. The threshold may be received from communication interface 353 from an external device over the network 346. The external device may be a municipality, a central controller, or a user device (e.g., mobile phone). The threshold may be received from user input device 355. The threshold may include a value for one or more of the transparency of the water, the turbidity of the water, the pH of the water, the biological oxygen demand, biochemical oxygen demand (BOD), total suspended solids (TSS), fecal coliform content, E. Coli content, or residual chlorine. The controller 400 (e.g., through processor 300) generates a valve command based on the comparison. The valve command may instruct a valve to open, to close, or partially open or close to another position. The valve may allow a predetermined quantity of water to enter the greywater tank. The valve may allow a predetermined quantity of water to drain from the greywater tank. The valve may allow a predetermined quantity of water to exit a water consuming device to a particular greywater system. The valve may allow a predetermined quantity of water to enter a water consuming device from a particular greywater system.

Processor 300 may be a general purpose or specific purpose processor, an application specific integrated circuit (ASIC), one or more programmable logic controllers (PLCs), one or more field programmable gate arrays (FPGAs), a group of processing components, or other suitable processing components. Processor 300 is configured to execute computer code or instructions stored in memory 352 or received from other computer readable media (e.g., embedded flash memory, local hard disk storage, local ROM, network storage, a remote server, etc.). The processor 300 may be a single device or combinations of devices, such as associated with a network, distributed processing, or cloud computing.

Memory 352 may include one or more devices (e.g., memory units, memory devices, storage devices, etc.) for storing data and/or computer code for completing and/or facilitating the various processes described in the present disclosure. Memory 352 may include random access memory (RAM), read-only memory (ROM), hard drive storage, temporary storage, non-volatile memory, flash memory, optical memory, or any other suitable memory for storing software objects and/or computer instructions. Memory 352 may include database components, object code components, script components, or any other type of information structure for supporting the various activities and information structures described in the present disclosure. Memory 352 may be communicably connected to processor 300 via a processing circuit and may include computer code for executing (e.g., by processor 300) one or more processes described herein. For example, memory 298 may include graphics, web pages, HTML files, XML files, script code, shower configuration files, or other resources for use in generating graphical user interfaces for display and/or for use in interpreting user interface inputs to make command, control, or communication decisions.

In addition to ingress ports and egress ports, the communication interface 353 may include any operable connection. An operable connection may be one in which signals, physical communications, and/or logical communications may be sent and/or received. An operable connection may include a physical interface, an electrical interface, and/or a data interface. The communication interface 353 may be connected to a network. The network may include wired networks (e.g., Ethernet), wireless networks, or combinations thereof. The wireless network may be a cellular telephone network, an 802.11, 802.16, 802.20, or WiMax network, a Bluetooth pairing of devices, or a Bluetooth mesh network. Further, the network may be a public network, such as the Internet, a private network, such as an intranet, or combinations thereof, and may utilize a variety of networking protocols now available or later developed including, but not limited to TCP/IP based networking protocols.

While the computer-readable medium (e.g., memory 352) is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored. The computer-readable medium may be non-transitory, which includes all tangible computer-readable media.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

## Claims

1. A multistage greywater treatment system comprising:
at least one separation stage configured to separate first intermediate greywater from particulate matter from one or more water draining devices;
at least one solid removal stage configured to receive the first intermediate greywater and dissolve solids from the first intermediate greywater to output a second intermediate greywater; and
at least one disinfection stage configured to disinfect the second intermediate greywater,
wherein resultant greywater from the at least one disinfection stage is provided to at least one recycled water consuming device after passing through the at least one separation stage, at least one solid removal stage, and the at least one disinfection stage.

2. The multistage greywater treatment system of claim 1, further comprising:
at least one biological treatment stage configured to receive second intermediate greywater and treat the water before the disinfection stage.

3. The multistage greywater treatment system of claim 2, wherein the at least one biological treatment stage includes a membrane reactor or a membrane aerated biofilm reactor.

4. The multistage greywater treatment system of claim 1, claim 2 or claim 3, wherein the at least one disinfection stage includes ultrasonic cavitation including one or more ultrasonic transducers configured to vibrate the intermediate greywater, optionally wherein one or more transducers are suspended in a tank by a cable and/or tether.

5. The multistage greywater treatment system of any one of the preceding claims, wherein the at least one disinfection stage includes: ozone; an ultraviolet light source; and/or electrolyzed water.

6. The multistage greywater treatment system of any one of the preceding claims, wherein the at least one separation stage includes at least three outputs, in addition to the first intermediate greywater, that include an oil phase and a suspended solid phase.

7. The multistage greywater treatment system of any one of the preceding claims, wherein the at least one separation stage includes a hydrodynamic centrifugal separation.

8. The multistage greywater treatment system of any one of the preceding claims, wherein the at least one separation stage, the at least one solid removal stage, and/or the at least one disinfection stage includes electrocoagulation.

9. The multistage greywater treatment system of any one of the preceding claims, wherein the at least one separation stage and/or the at least one solid removal stage includes dissolved air flotation.

10. The multistage greywater treatment system of any one of the preceding claims, wherein the at least one separation stage and/or the at least one solid removal stage includes electro-oxidation.

11. The multistage greywater treatment system of any one of the preceding claims, wherein the at least one separation stage and/or the at least one solid removal stage includes electroflotation.

12. The multistage greywater treatment system of , wherein the at least one separation stage includes: foam fractionation; a hydrodynamic centrifugal separation; electrocoagulation; and/or dissolved air flotation.

13. A method for treating greywater, the method comprising:
receiving water from a first water consuming device;
performing oil or solid separation on the water;
performing biological treatment on the water;
disinfecting the water; and
providing treated water to a second water consuming device.

14. A multistage greywater treatment system comprising:
at least one separation stage configured to separate water, from one or more water draining devices, into at least three outputs including an intermediate greywater; and
at least one disinfection stage configured to receive the intermediate greywater and disinfect the intermediate greywater to generate a resultant greywater,
wherein the resultant greywater is provided to at least one recycled water consuming device after passing through the at least one separation stage and the at least one disinfection stage.
